# EUROPÄISCHE PATENTSCHRIFT

(11) **EP 3 747 073 B1**
(45) Veröffentlichungstag und Bekanntmachung des Hinweises auf die Patenterteilung: **14.07.2021**
(21) Anmeldenummer: 19783642.2
(22) Anmeldetag: 28.08.2019
(51) Int. Cl.: H01M 8/04007, H01M 8/043, H01M 8/249

(54) **VERFAHREN ZUM BETREIBEN EINES BRENNSTOFFZELLENSYSTEMS FÜR EIN KRAFTFAHRZEUG**
METHOD FOR OPERATING A FUEL CELL SYSTEM FOR A MOTOR VEHICLE
PROCÉDÉ POUR FAIRE FONCTIONNER UN SYSTÈME DE PILE À COMBUSTIBLE POUR UN VÉHICULE AUTOMOBILE

(30) Priorität: 29.08.2018 DE 102018214643
(43) Veröffentlichungstag der Anmeldung: 09.12.2020
(73) Patentinhaber: Robert Bosch GmbH, 70469 Stuttgart (DE); Nikola Corporation, Phoenix, AZ 85040 (US)
(72) Erfinder: LYNK, Kevin, Phoenix, AZ 85044 (US); SCHNEIDER, Jesse, Chandler, AZ 85286 (US); IMRE, Arpad, 71665 Vaihingen (DE); BELSCHNER, Werner, 74544 Michelbach An Der Bilz (DE); ECKERT, Peter, 74626 Bretzfeld (DE); HEYSE, Jörg, 74354 Besigheim (DE)
(74) Vertreter: Kietzmann, Lutz
(86) Internationale Anmeldenummer: PCT/IB2019/057250
(87) Internationale Veröffentlichungsnummer: WO 2020/044259

(56) Entgegenhaltungen:
- DE-A1-102012 007 382
- DE-A1-102016 115 789
- JP-A- 2016 031 841
- US-A1- 2010 297 515

## Beschreibung

Die vorliegende Erfindung betrifft ein Verfahren zum Betreiben eines Brennstoffzellensystems für ein Kraftfahrzeug.

Bei Brennstoffzellensystemen wird in der Regel das Oxidationsmittel Sauerstoff aus der Umgebungsluft benutzt, um in der Brennstoffzelle mit Wasserstoff zu Wasser zu reagieren und damit durch elektrochemische Wandlung eine elektrische Leistung zu liefern. Während dieses Prozesses produziert die Brennstoffzelle zusätzlich thermische Energie, welche über eine Kühlung abgeführt werden muss.

### Stand der Technik

Aus der EP 2 287 952 B1 ist eine Temperiervorrichtung zum Temperieren eines Brennstoffzellenstacks bekannt.

Die DE 10 2016 115 789 A1 betrifft eine Brennstoffzelle für ein Brennstoffzellenaggregat eines Brennstoffzellensystems mit einem eine Vielzahl von Einzelzellen aufweisenden Brennstoffzellenstapel. Die Brennstoffzelle ist dabei derart eingerichtet, dass wenigstens ein Einzelzellpaket des Brennstoffzellenstapels betreibbar ist, während wenigstens ein zweites Einzelzellpaket abgeschaltet ist.

Ein Brennstoffzellensystem ist auch aus der DE 10 2012 007 382 A1 bekannt. Das Brennstoffzellensystem umfasst dabei wenigstens einen ersten Brennstoffzellenstapel und zweiten Brennstoffzellenstapel, wobei eine von der Abluft des ersten Brennstoffzellenstapels durchströmte Expansionseinrichtung zwischen dem ersten und dem zweiten Brennstoffzellenstapel vorgesehen ist.

Aus der US 2010/0297515 A1 ist eine modulare Verbindung von Brennstoffzellenstapeln bekannt, insbesondere zum Stapeln von Modulen mit einer seriellen Verbindung der Kathodengaseinlässe und -auslässe, insbesondere zum Stapeln von Modulen mit jeweils einem gemeinsamen Kathodengasseitenverteiler für die gesamten Brennstoff Zellen in einem Modul, insbesondere für SOFC-Stapel (Solid Oxide Fuel Cell).

Der Hintergrund der Erfindung liegt darin, dass um einen möglichst guten Wirkungsgrad für die Brennstoffzelle zu erreichen, muss diese mit einer bestimmten, möglichst gleichbleibenden Betriebstemperatur betrieben werden. Die Betriebstemperatur hängt dabei vom Typ der Brennstoffzelle ab. Bei einem Überhitzen der Brennstoffzelle muss die Leistung der Brennstoffzelle beschränkt werden. Aus diesem Grund ist eine ausreichende Kühlung während des Betriebes wichtig. Zum anderen kann bei einer Betriebsaufnahme der Brennstoffzelle bei niedrigen Temperaturen, die als Kaltstart bezeichnet wird, die Brennstoffzelle nur eine geringe Leistung bereitstellen, da die elektrochemische Reaktion und damit die Spannung der Brennstoffzelle stark temperaturabhängig ist. Daher muss die Temperatur der Brennstoffzelle bei einem Kaltstart zügig erhöht werden.

Es ist daher die Aufgabe der vorliegenden Erfindung ein Verfahren zum Betreiben eines Brennstoffzellensystems für ein Kraftfahrzeug anzugeben, mit welchem das Brennstoffzellensystem auf energieeffiziente und wirtschaftliche Weise betreibbar ist.

### Offenbarung der Erfindung

Die Aufgabe wird durch ein Verfahren zum Betreiben eines Brennstoffzellensystems für ein Kraftfahrzeug mit den Merkmalen nach Anspruch 1 gelöst. Die jeweils rückbezogenen abhängigen Ansprüche geben vorteilhafte Weiterbildungen der Erfindung wieder.

Die Erfindung gibt ein Verfahren zum Betreiben eines Brennstoffzellensystems für ein Kraftfahrzeug an, wobei das Brennstoffzellensystem wenigstens zwei Brennstoffzellenstacks aufweist und das Verfahren wenigstens vier verschiedene Betriebsmodi umfasst. Das Verfahren umfasst dabei einen ersten Betriebsmodus, bei dem bei Inaktivität aller Brennstoffzellenstacks wenigstens ein wenigstens einen Brennstoffzellenstack umfassender Kühlmediumkreislauf des Brennstoffzellensystems über ein mittels eines elektrischen Heizers vorgeheizten Kühlmediums bei Umgehung aller Kühlerkreisläufe der aktiven Kühlmediumkreisläufe über Bypassleitungen vorgewärmt wird, und der wenigstens eine vorgewärmte Brennstoffzellenstack zum Vorwärmen wenigstens eines weiteren wenigstens einen Brennstoffzellenstack umfassenden Kühlmediumkreislaufs des Brennstoffzellensystems in einem nächsten Schritt in Betrieb genommen wird, einen zweiten Betriebsmodus, bei welchem alle Kühlmediumkreisläufe betrieben werden und wenigstens ein Brennstoffzellenstack inaktiv ist, wobei zu allen aktiv betriebenen Brennstoffzellenstacks die Kühlerkreisläufe aktiv betrieben werden und zusätzlich die Umgehung wenigstens eines Kühlerkreislaufes über die Bypassleitung des wenigstens einen inaktiven Brennstoffzellenstack wenigstens reduziert wird, einen dritten Betriebsmodus, bei welchem bei Betrieb aller Kühlmediumkreisläufe wenigstens zwei Brennstoffzellenstacks und die Kühlerkreisläufe aller Brennstoffzellenstacks aktiv betrieben werden, und einen vierten Betriebsmodus, bei welchem bei Inaktivität wenigstens eines Brennstoffzellenstacks der dazugehörige Kühlerkreislauf über die Bypassleitung umgangen wird, und wobei alle Kühlmediumkreisläufe des Brennstoffzellensystems aktiv sind, so dass die inaktiven Brennstoffzellenstacks über die aktiven Brennstoffzellenstacks warm gehalten werden.

Als Kühlerkreis im Sinne der Erfindung wird lediglich einen den Kühler umfassender Leitungsabschnitt des Kühlmediumkreislaufes verstanden. Dieser Leitungsabschnitt kann durch eine Bypassleitung des Kühlmediumkreislaufes umgangen werden, so dass kein Kühlmedium bzw. eine reduzierte Kühlmediummenge durch den Kühler geleitet wird. Unter einer Inaktivität eines Brennstoffzellenstacks ist zu verstehen, dass dieser Brennstoffzellenstack nicht betrieben bzw. nicht mit Brennstoff versorgt wird. Dementsprechend wird bei einem aktiv betriebenen Brennstoffzellenstack, dieser mit Brennstoff versorgt. Das Verfahren zum Betreiben des Brennstoffzellensystems hat den Vorteil, dass über die Aufheizung eines weiteren Brennstoffzellenstacks über die Abwärme eines aktiven Brennstoffzellenstacks Energie eines elektrischen Heizers eingespart werden kann. Dadurch kann das Verfahren energieeffizienter und wirtschaftlicher betrieben werden. Durch die mögliche Verwendung aller vorhandenen Kühler für die Kühlung des Kühlmediums können die einzelnen Kühler kleiner ausgelegt und/oder kann die erforderliche Lüfterleistung zur Kühlung reduziert werden, so dass das Verfahren wirtschaftlicher ist. Auch die Möglichkeit einer Durchströmung der inaktiven Brennstoffzellenstacks reduziert durch die Aufwärmung der Brennstoffzellenstack bzw. das Warmhalten, die benötigte Kühlerleistung. Das Verfahren hat zusätzlich den Vorteil, dass trotz einer hohen Freiheit der Verfahrensführung ein Großteil der Komponenten gemeinsam nutzbar ist. Dadurch wird die Wirtschaftlichkeit eines solchen Verfahrens erhöht.

In einer bevorzugten Ausführung der Erfindung wird das Kühlmedium zusätzlich zum Beheizen eines Innenraumes des Kraftfahrzeuges verwendet. Dazu wird das Kühlmedium durch einen Wärmetauscher geleitet, so dass eine dem Innenraum zugeleitete Luft erwärmt wird. Dadurch kann der Innenraum schnell auf eine angenehme Temperatur gebracht werden. Zusätzlich können Kosten für einen elektrischen Innenraumheizer eingespart werden. Durch die Beheizung des Innenraumes wird zusätzlich ein Kühleffekt des Kühlmediums erzielt.

Vorteilhafterweise wird das Kühlmedium über eine Innenraumwärmetauscherpumpe einem Innenraumwärmetauscher zugeführt. Dadurch wird eine Versorgung des Innenraumwärmetauschers sichergestellt. Zusätzlich kann durch Regelung der Pumpleistung die Durchflussmenge und damit die für den Innenraumwärmetauscher benötigte Wärmeenergie geregelt werden. Auch ist Innenraumwärmetauscher unabhängig von einem Betrieb des Kühlmediumkreislaufes betreibbar.

In einer bevorzugten Weiterbildung der Erfindung umfasst das Verfahren einen Betriebsmodus, bei welchem bei Inaktivität aller Kühlmediumkreisläufe, aller Brennstoffzellenstacks und aller Kühlerkreisläufe, das Kühlmedium mittels des elektrischen Heizers aufgeheizt wird und die Wärme über den Innenraumwärmetauscher abgegeben wird. Bei diesem Betriebsmodus kann eine Beheizung des Innenraumes auch bei einer Inaktivität der Kühlmediumkreisläufe durchgeführt werden. Dieser Betriebsmodus ist insbesondere interessant für eine Beheizung des Innenraumes, bei welchem das Kraftfahrzeug nicht betrieben wird. Dadurch kann ein Fahrer beispielsweise im Fahrzeug bei ausreichender Temperierung des Innenraumes übernachten.

In einer weiteren bevorzugten Ausführung der Erfindung werden im zweiten Betriebsmodus alle Kühlerkreisläufe der inaktiven Brennstoffzellenstacks in Betrieb genommen. Dadurch kann eine maximale Kühlleistung des Brennstoffzellensystems erzielt werden. Durch die Nutzung aller Kühler wird die Kühlerfläche erhöht, so dass Energie zum Betreiben der Kühlerlüfter eingespart werden kann. Es wird zusätzlich vermieden, dass der Brennstoffzellenstack zum Schutz vor einer Überhitzung heruntergeregelt wird.

Vorzugsweise wird im zweiten Betriebsmodus wenigstens ein Kühlerkreislauf der inaktiven Brennstoffzellenstacks über die Bypassleitung umgangen. Dabei kann bevorzugt der Kühlerkreislauf wenigstens teilweise über die Bypassleitung umgangen werden. Dadurch wird die Kühlleistung soweit reduziert bzw. eingestellt, dass eine Auskühlung des Brennstoffzellensystems vermieden wird.

Vorteilhafterweise wird das Kühlmedium mittels eines PTC-Heizers elektrisch vorgeheizt. PTC-Heizer haben den Vorteil, dass sie sich nur bis zu einer bestimmten Temperatur aufheizen und die Stromaufnahme danach automatisch reduziert wird. Im Vergleich dazu benötigen andere Techniken eine Regelung, da deren Heizelemente nicht selbstregelnd sind. Es ist somit keine Regelung notwendig.

In einer bevorzugten Ausgestaltung wird im ersten Betriebsmodus ein einziger Kühlmediumkreislauf aktiv betrieben, so dass ein einziger Brennstoffzellenstack elektrisch vorgewärmt wird. Dies hat den Vorteil, dass dieser Brennstoffzellenstack schneller aufgeheizt wird, so dass die Abwärme dieses Brennstoffzellenstacks schneller zum Aufheizen der übrigen Brennstoffzellenstacks verwendet werden kann.

In einer vorteilhaften Ausführungsform wird eine Umgehung oder Reduzierung der Durchströmung der Kühlerkreisläufe über die Bypassleitungen mittels Ventilen aktiviert. Bevorzugt werden dabei Umschaltventile und besonders bevorzugt 3/2-Wege-Umschaltventile eingesetzt. Mittels Ventilen kann der Kühlmediumstrom geleitet werden. Durch eine entsprechende Ansteuerung der Ventile kann beispielsweise ein Kühlkreislauf mit dem entsprechenden Kühler umgangen werden, so dass eine Kühlleistung reduziert wird.

Bevorzugt werden alle Kühlmediumkreisläufe zu einer gemeinsamen Sammelleitung zusammengeführt. Als Sammelleitung ist dabei eine Leitung zu verstehen in die aus verschiedenen Quellen das Kühlmedium eingeleitet und weitertransportiert wird. Nachdem das gesamte Kühlmedium in die Sammelleitung eingeleitet wurde, wird das Kühlmedium zu den verschiedenen Brennstoffzellenstacks geleitet. Dadurch kann das Kühlmedium auf alle Brennstoffzellenstacks verteilt werden. Zusätzlich wird die Temperatur des Kühlmediums in den verschiedenen Kühlmediumkreisläufen durch eine Durchmischung in der Sammelleitung aneinander angeglichen, so dass die Kühlleistung aller Kühler und die Abwärme aller Brennstoffzellenstacks nutzbar sind. Zudem sind Komponenten, die für alle Brennstoffzellenstacks benötigt werden, wie z.B. der elektrische Heizer durch eine Anordnung in der Sammelleitung für alle Brennstoffzellenstacks nutzbar. Dadurch wird die Wirtschaftlichkeit eines solchen Verfahrens erhöht.

Die Kühlmediumkreisläufe werden vorzugsweise durch Kühlmediumpumpen betrieben. Durch eine entsprechende Kühlmediumpumpe eines Kühlmediumkreislaufes kann dadurch ein Betrieb oder ein Nichtbetrieb des Kühlmediumkreislaufes festgelegt werden. Die Kühlmediumpumpen können zudem geregelt werden, so dass ein Volumenstrom regelbar ist.

In einer vorteilhaften Weiterbildung der Erfindung wird die Kühlmediumpumpe wenigstens eines inaktiven Brennstoffzellenstack mit einer geringeren Antriebsleistung betrieben. Eine geringere Antriebsleistung im Sinne der Erfindung schließt dabei auch eine Antriebsleistung ein, welche Null ist. Dadurch wird die Durchströmung dieses Kühlmediumkreislaufes reduziert. Eine Kühlleistung des dem inaktiven Brennstoffzellenstacks zugeordneten Kühlmediumskreislaufes wird dadurch reduziert. Trotz alledem kann der inaktive Brennstoffzellenstack auf einer Betriebstemperatur gehalten werden. Zusätzlich kann Pumpenantriebsenergie eingespart werden.

Ausführungsbeispiele der Erfindung sind in der Zeichnung dargestellt und in der nachfolgenden Beschreibung näher erläutert. Es zeigt:
- Figur 1a: Darstellung eines ersten Verfahrensschrittes des ersten Betriebsmodus zum Betreiben eines Brennstoffzellensystems nach einem Ausführungsbeispiel der Erfindung,
- Figur 1b: Darstellung eines zweiten Verfahrensschrittes des ersten Betriebsmodus zum Betreiben eines Brennstoffzellensystems nach einem Ausführungsbeispiel der Erfindung,
- Figur 2: Darstellung des zweiten Betriebsmodus zum Betreiben eines Brennstoffzellensystems nach einem Ausführungsbeispiel der Erfindung,
- Figur 3: Darstellung des dritten Betriebsmodus zum Betreiben eines Brennstoffzellensystems nach einem Ausführungsbeispiel der Erfindung,
- Figur 4: Darstellung des vierten Betriebsmodus zum Betreiben eines Brennstoffzellensystems nach einem Ausführungsbeispiel der Erfindung, und
- Figur 5: Darstellung des ersten Verfahrensschrittes des ersten Betriebsmodus zum Betreiben eines Brennstoffzellensystems entsprechend dem Ausführungsbeispiel nach Figur 1a, bei welchem zusätzlich eine Beheizung eines Innenraumes des Kraftfahrzeuges verwendet wird.

In Figur la ist eine Darstellung eines ersten Verfahrensschrittes des ersten Betriebsmodus zum Betreiben eines Brennstoffzellensystems 10 nach einem Ausführungsbeispiel der Erfindung gezeigt. Dieses Ausführungsbeispiel zeigt beispielhaft anhand eines ersten und eines zweiten Kühlmediumkreislaufes 14, 18 den ersten Verfahrensschritt des ersten Betriebsmodus. Über den ersten und den zweiten Kühlmediumkreislauf 14, 18 ist jeweils einem ersten und einem zweiten Brennstoffzellenstack 22, 26 Kühlmedium, mittels einer dem ersten Brennstoffzellenstack 22 zugeordneten ersten Kühlmediumpumpe 30 und einer dem zweiten Brennstoffzellenstack 26 zugeordneten zweiten Kühlmediumpumpe 34, zuführbar. Die erste Kühlmediumpumpe 30 wird dabei über einen ersten Kühlmediumpumpenmotor 35 und die zweite Kühlmediumpumpe 34 über einen zweiten Kühlmediumpumpenmotor 36 angetrieben.

Bei diesem ersten Verfahrensschritt wird bei Inaktivität aller Brennstoffzellenstacks 22, 26 und Inaktivität der zweiten Kühlmediumpumpe 34 und somit Inaktivität des zweiten Kühlmediumkreislauf 18 dem ersten Brennstoffzellenstack 22 über die erste Kühlmediumpumpe 30 Kühlmedium zugeführt. Dieses Kühlmedium wird über einen in einer Sammelleitung 38 angeordneten elektrischen Heizer 42, welcher in diesem Ausführungsbeispiel ein PTC-Heizer ist, aufgeheizt. Eine definierte Durchflussmenge des PTC-Heizers 42 wird dabei gewährleistet durch eine Drossel 46, welche zwischen einer Heizerabzweigung 50 und einer Heizereinmündung 54 in der Sammelleitung 38 angeordnet ist.

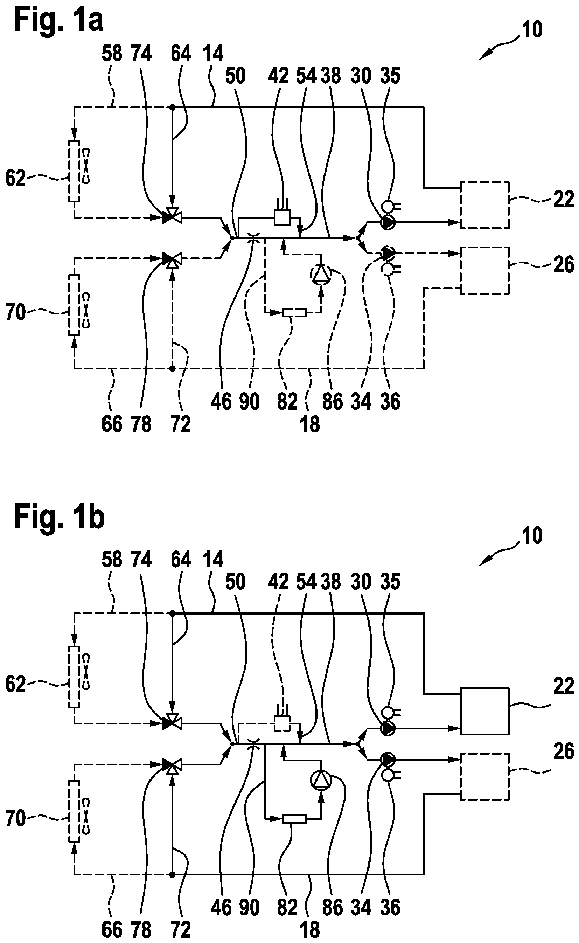

Um die Vorwärmung des ersten Brennstoffzellenstacks 22 zu beschleunigen wird ein in einem ersten Kühlerkreislauf 58 angeordneter erster Kühler 62 über eine erste Bypassleitung 64 umgangen, so dass der erste Kühlerkreislauf 58 inaktiv ist. Entsprechend zu dem ersten Kühlerkreislauf 58, weist der zweite Kühlmediumkreislauf 18 einen zweiten Kühlerkreislauf 66 mit einem zweiten Kühler 70 auf, wobei der zweite Kühlerkreislauf 66 über eine zweite Bypassleitung 72 umgangen werden kann, so dass der zweite Kühlerkreislauf 66 inaktiv ist. Eine Umgehung der Kühlerkreisläufe 58, 66 wird dabei durch eine entsprechende Schaltung eines ersten und zweiten Ventils 74, 78, welche hier als 3/2-Wege-Umschaltventile ausgebildet sind, erzielt. Während dieser Phase kann ein Innenraumwärmetauscher 82, welcher einen Innenraum eines Kraftfahrzeuges aufheizt, aktiv oder inaktiv sein. In Figur 1a ist der Innenraumwärmetauscher 82 inaktiv, so dass eine schnellere Aufheizung des ersten Brennstoffzellenstacks 22 erzielt wird.

In Figur 1b ist eine Darstellung eines zweiten Verfahrensschrittes des ersten Betriebsmodus zum Betreiben eines Brennstoffzellensystems 10 nach einem Ausführungsbeispiel der Erfindung gezeigt. Bei diesem Verfahrensschritt wird der erste Brennstoffzellenstack 22 nach Erreichen einer minimal erforderlichen Starttemperatur eingeschaltet. Um Energie zu sparen wird dabei der PTC-Heizer 42 deaktiviert. Zusätzlich wird zu dem in Figur 1a gezeigten Verfahrensschritt die zweite Kühlmediumpumpe 34 aktiviert, so dass der zweite inaktive Brennstoffzellenstack 26 über die Abwärme des ersten Brennstoffzellenstacks 22 vorgeheizt und auf Betriebstemperatur gebracht wird.

Um die Aufheizung des zweiten Brennstoffzellenstacks 26 zu beschleunigen wird bei dem zweiten Verfahrensschritt des ersten Betriebsmodus zusätzlich zu dem ersten Kühlerkreislauf 58 der zweite Kühlerkreislauf 66 über die zweite Bypassleitung 72 umgangen. In dem zweiten Verfahrensschritt kann auch zusätzlich der Innenraumwärmetauscher 82 aktiv sein. In der hier gezeigten Figur 1b ist der Innenraumwärmetauscher 82 beispielhaft aktiv gezeigt. Dazu wird eine dem Innenraumwärmetauscher 82 zugeordnete Innenraumwärmetauscherpumpe 86 in einem Innenraumwärmetauscherkreislauf 90 betrieben, um das Kühlmittel durch den Innenraumwärmetauscher 82 zu pumpen.

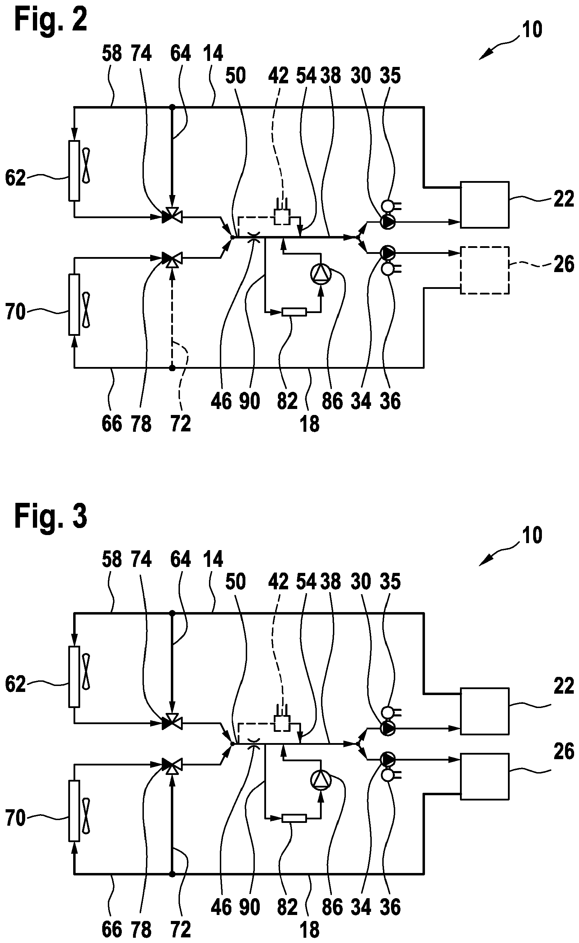

Figur 2 zeigt eine Darstellung des zweiten Betriebsmodus zum Betreiben eines Brennstoffzellensystems 10 nach einem Ausführungsbeispiel der Erfindung. Bei diesem Betriebsmodus ist der erste Brennstoffzellenstack 22 aktiv, währenddessen der zweite Brennstoffzellenstack 26 inaktiv ist. Durch den Betrieb beider Kühlmediumpumpen 30, 34 wird das Kühlmedium durch beide Kühlmediumkreisläufe 14, 18 gepumpt. Dabei wird der inaktive zweite Brennstoffzellenstack 26 durchströmt und warm gehalten.

Im zweiten Betriebsmodus ist dabei zusätzlich zu dem ersten 3/2-Wege-Umschaltventil 74 das zweite 3/2-Wege-Umschaltventil 78 des ersten und zweiten Kühlmediumkreislaufes 14, 18 derart geschaltet, dass der erste und der zweite Kühler 62, 70 durchströmt werden. Dadurch kann eine bessere Kühlleistung während des zweiten Betriebsmodus erzielt werden. Um eine unnötige Aufheizung des Kühlmediums zu vermeiden und um Energie zu sparen ist der PTC-Heizer 42 während des zweiten Betriebsmodus inaktiv. Auch bei diesem Betriebsmodus ist der Innenraumwärmetauscher 82 beispielhaft aktiv gezeigt.

In Figur 3 ist eine Darstellung eines dritten Betriebsmodus zum Betreiben eines Brennstoffzellensystems 10 nach einem Ausführungsbeispiel der Erfindung gezeigt. Bei diesem Betriebsmodus ist der erste und der zweite Brennstoffzellenstack 22, 26 aktiv. Die durch die Brennstoffzellenstacks 22, 26 produzierte Abwärme wird dabei über beide Kühler 62, 70 abgeführt. Ebenso wie bei dem zweiten Betriebsmodus ist auch beim dritten Betriebsmodus der PTC-Heizer 42 inaktiv.

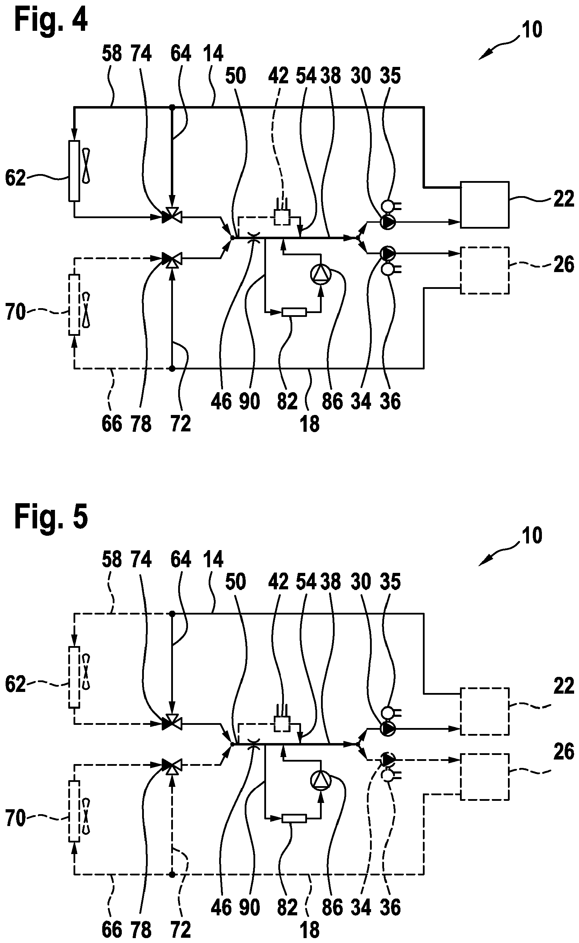

Figur 4 zeigt eine Darstellung des vierten Betriebsmodus zum Betreiben eines Brennstoffzellensystems 10 nach einem Ausführungsbeispiel der Erfindung. Bei diesem Betriebsmodus ist der zweite Brennstoffzellenstack 26 und der zweite Kühler 70 inaktiv. Durch letzteres ist die Kühlleistung reduziert, so dass bei Auskühlungsgefahr infolge von z.B. niedriger Außentemperatur und Fahrtwind eine ausreichende Temperatur in den Kühlmediumkreisläufen 14, 18 sichergestellt werden kann. Zusätzlich wird der zweite Brennstoffzellenstack 26 durchströmt, so dass dieser auf Betriebstemperatur gehalten werden kann.

Figur 5 zeigt eine Darstellung des ersten Verfahrensschrittes des ersten Betriebsmodus zum Betreiben eines Brennstoffzellensystems 10 entsprechend dem Ausführungsbeispiel nach Figur 1a, bei welchem zusätzlich eine Beheizung eines Innenraumes des Kraftfahrzeuges verwendet wird. Bei diesem Betriebsmodus wird trotz Inaktivität beider Brennstoffzellenstacks 22, 26 der Innenraumwärmetauscher 82 des Kraftfahrzeuges verwendet. Dadurch ist zwar die Aufheizdauer des ersten Brennstoffzellenstacks 22 verlängert, es kann jedoch gleichzeitig der Innenraum beheizt werden.

In einem weiteren nicht gezeigten Betriebsmodus zum Betreiben eines Brennstoffzellensystems 10 nach einem weiteren Ausführungsbeispiel der Erfindung wird im Gegensatz zu dem in Figur 5 gezeigten Ausführungsbeispiel zusätzlich der erste Kühlmediumkreislauf 14 und damit die erste Kühlmediumpumpe 30 inaktiv bzw. nicht betrieben. Über die Innenraumwärmetauscherpumpe 86 wird zwischen PTC-Heizer 42 und Innenraumwärmetauscher 82 ein Kreislauf des Kühlmediums generiert, so dass nur der Innenraum elektrisch beheizt wird.

### Bezugszeichenliste

- 10: Brennstoffzellensystem
- 14: erster Kühlmediumkreislauf
- 18: zweiter Kühlmediumkreislauf
- 22: erster Brennstoffzellenstack
- 26: zweiter Brennstoffzellenstack
- 30: erste Kühlmediumpumpe
- 34: zweite Kühlmediumpumpe
- 35: erster Kühlmediumpumpenmotor
- 36: zweiter Kühlmediumpumpenmotor
- 38: Sammelleitung
- 42: elektrischer Heizer
- 46: Drossel
- 50: Heizerabzweigung
- 54: Heizereinmündung
- 58: erster Kühlerkreislauf
- 62: erster Kühler
- 64: erste Bypassleitung
- 66: zweiter Kühlerkreislauf
- 70: zweiter Kühler
- 72: zweite Bypassleitung
- 74: erstes Ventil
- 78: zweites Ventil
- 82: Innenraumwärmetauscher
- 86: Innenraumwärmetauscherpumpe
- 90: Innenraumwärmetauscherkreislauf

## Patentansprüche

1. Verfahren zum Betreiben eines Brennstoffzellensystems (10) für ein Kraftfahrzeug, wobei das Brennstoffzellensystem (10) wenigstens zwei Brennstoffzellenstacks (22, 26) aufweist und das Verfahren wenigstens vier verschiedene Betriebsmodi umfasst:
- einen ersten Betriebsmodus, bei dem bei Inaktivität aller Brennstoffzellenstacks (22, 26) wenigstens ein wenigstens einen Brennstoffzellenstack (22) umfassender Kühlmediumkreislauf (14) des Brennstoffzellensystems (10) über ein mittels eines elektrischen Heizers (42) vorgeheizten Kühlmediums bei Umgehung aller Kühlerkreisläufe (58) der aktiven Kühlmediumkreisläufe (14) über Bypassleitungen (64) vorgewärmt wird, und der wenigstens eine vorgewärmte Brennstoffzellenstack (22) zum Vorwärmen wenigstens eines weiteren wenigstens einen Brennstoffzellenstack (26) umfassenden Kühlmediumkreislaufs (18) des Brennstoffzellensystems (10) in einem nächsten Schritt in Betrieb genommen wird,
- einen zweiten Betriebsmodus, bei welchem alle Kühlmediumkreisläufe (14, 18) betrieben werden und wenigstens ein Brennstoffzellenstack (26) inaktiv ist, wobei zu allen aktiv betriebenen Brennstoffzellenstacks (22) die Kühlerkreisläufe (58) aktiv betrieben werden und zusätzlich die Umgehung wenigstens eines Kühlerkreislaufes (66) über die Bypassleitung (72) des wenigstens einen inaktiven Brennstoffzellenstack (26) wenigstens reduziert wird,
- einen dritten Betriebsmodus, bei welchem bei Betrieb aller Kühlmediumkreisläufe (14, 18) wenigstens zwei Brennstoffzellenstacks (22, 26) und die Kühlerkreisläufe (58, 66) aller Brennstoffzellenstacks (22, 26) aktiv betrieben werden, und
- einen vierten Betriebsmodus, bei welchem bei Inaktivität wenigstens eines Brennstoffzellenstacks (26) der dazugehörige Kühlerkreislauf (66) über die Bypassleitung (72) umgangen wird, und wobei alle Kühlmediumkreisläufe (14, 18) des Brennstoffzellensystems (10) aktiv sind, so dass die inaktiven Brennstoffzellenstacks (26) über die aktiven Brennstoffzellenstacks (22) warm gehalten werden.

2. Verfahren zum Betreiben eines Brennstoffzellensystems (10) nach Anspruch 1, **dadurch gekennzeichnet, dass** das Kühlmedium zusätzlich zum Beheizen eines Innenraumes des Kraftfahrzeuges verwendet wird.

3. Verfahren zum Betreiben eines Brennstoffzellensystems (10) nach Anspruch 2, **dadurch gekennzeichnet, dass** das Kühlmedium über eine Innenraumwärmetauscherpumpe (86) einem Innenraumwärmetauscher (82) zugeführt wird.

4. Verfahren zum Betreiben eines Brennstoffzellensystems (10) nach Anspruch 3, **dadurch gekennzeichnet, dass** das Verfahren einen Betriebsmodus umfasst, bei welchem bei Inaktivität aller Kühlmediumkreisläufe (14, 18), aller Brennstoffzellenstacks (22, 26) und aller Kühlerkreisläufe (58, 66), das Kühlmedium mittels des elektrischen Heizers (42) aufgeheizt wird und die Wärme über den Innenraumwärmetauscher (82) abgegeben wird.

5. Verfahren zum Betreiben eines Brennstoffzellensystems (10) nach einem der vorherigen Ansprüche, **dadurch gekennzeichnet, dass** im zweiten Betriebsmodus alle Kühlerkreisläufe (66) der inaktiven Brennstoffzellenstacks (26) in Betrieb genommen werden.

6. Verfahren zum Betreiben eines Brennstoffzellensystems (10) nach einem der Ansprüche 1 bis 4, **dadurch gekennzeichnet, dass** im zweiten Betriebsmodus wenigstens ein Kühlerkreislauf (66) der inaktiven Brennstoffzellenstacks (26) über die Bypassleitung (72) umgangen wird.

7. Verfahren zum Betreiben eines Brennstoffzellensystems (10) nach einem der vorherigen Ansprüche, **dadurch gekennzeichnet, dass** das Kühlmedium mittels eines PTC-Heizers (42) elektrisch vorgeheizt wird.

8. Verfahren zum Betreiben eines Brennstoffzellensystems (10) nach einem der vorherigen Ansprüche, **dadurch gekennzeichnet, dass** im ersten Betriebsmodus ein einziger Kühlmediumkreislauf (14) aktiv betrieben wird, so dass ein einziger Brennstoffzellenstack (22) elektrisch vorgewärmt wird.

9. Verfahren zum Betreiben eines Brennstoffzellensystems (10) nach einem der vorherigen Ansprüche, **dadurch gekennzeichnet, dass** eine Umgehung oder Reduzierung der Durchströmung der Kühlerkreisläufe (58, 66) über die Bypassleitungen (64, 72) mittels Ventilen (74, 78) geregelt wird.

10. Verfahren zum Betreiben eines Brennstoffzellensystems (10) nach einem der vorherigen Ansprüche, **dadurch gekennzeichnet, dass** alle Kühlmediumkreisläufe (14, 18) zu einer gemeinsamen Sammelleitung (38) zusammengeführt werden.

11. Verfahren zum Betreiben eines Brennstoffzellensystems (10) nach einem der vorherigen Ansprüche, **dadurch gekennzeichnet, dass** die Kühlmediumkreisläufe (14, 18) durch Kühlmediumpumpen (30, 34) betrieben werden.

12. Verfahren zum Betreiben eines Brennstoffzellensystems (10) nach Anspruch 11, **dadurch gekennzeichnet, dass** die Kühlmediumpumpe (34) wenigstens eines inaktiven Brennstoffzellenstack (26) mit einer geringeren Antriebsleistung betrieben wird.

## Claims

1. Method for operating a fuel cell system (10) for a motor vehicle, the fuel cell system (10) having at least two fuel cell stacks (22, 26), and the method comprising at least four different operating modes:
- a first operating mode in which, when all the fuel cell stacks (22, 26) are inactive, at least one cooling medium circuit (14), comprising at least one fuel cell stack (22), of the fuel cell system (10) is preheated via a cooling medium preheated by means of an electric heater (42), with all the cooling medium circuits (58) of the active cooling medium circuits (14) being bypassed via bypass lines (64), and the at least one preheated fuel cell stack (22) is put into operation for preheating at least one further cooling medium circuit (18), comprising at least one fuel cell stack (26), of the fuel cell system (10) in a next step,
- a second operating mode in which all cooling medium circuits (14, 18) are operated and at least one fuel cell stack (26) is inactive, the cooler circuits (58) being actively operated for all actively operated fuel cell stacks (22) and, in addition, the bypassing of at least one cooler circuit (66) via the bypass line (72) of the at least one inactive fuel cell stack (26) being at least reduced,
- a third operating mode in which, during operation of all cooling medium circuits (14, 18), at least two fuel cell stacks (22, 26) and the cooler circuits (58, 66) of all fuel cell stacks (22, 26) are actively operated, and
- a fourth operating mode in which, in the event of inactivity of at least one fuel cell stack (26), the associated cooler circuit (66) is bypassed via the bypass line (72), and all cooling medium circuits (14, 18) of the fuel cell system (10) being active, so that the inactive fuel cell stacks (26) are kept warm via the active fuel cell stacks (22).

2. Method for operating a fuel cell system (10) according to claim 1, **characterized in that** the cooling medium is additionally used for heating an interior of the motor vehicle.

3. Method for operating a fuel cell system (10) according to claim 2, **characterized in that** the cooling medium is supplied to an interior heat exchanger (82) via an interior heat exchanger pump (86).

4. Method for operating a fuel cell system (10) according to claim 3, **characterized in that** the method comprises an operating mode in which, when all cooling medium circuits (14, 18), all fuel cell stacks (22, 26) and all cooler circuits (58, 66) are inactive, the cooling medium is heated by means of the electric heater (42) and the heat is released via the interior heat exchanger (82).

5. Method for operating a fuel cell system (10) according to any one of the preceding claims, **characterized in that** in the second operating mode all cooler circuits (66) of the inactive fuel cell stacks (26) are brought into operation.

6. Method for operating a fuel cell system (10) according to any one of claims 1 to 4, **characterized in that** in the second operating mode at least one cooler circuit (66) of the inactive fuel cell stacks (26) is bypassed via the bypass line (72).

7. Method for operating a fuel cell system (10) according to any one of the preceding claims, **characterized in that** the cooling medium is electrically preheated by means of a PTC heater (42).

8. Method for operating a fuel cell system (10) according to any one of the preceding claims, **characterized in that** in the first operating mode a single cooling medium circuit (14) is actively operated so that a single fuel cell stack (22) is electrically preheated.

9. Method for operating a fuel cell system (10) according to one of the preceding claims, **characterized in that** bypassing or reducing the flow through the cooler circuits (58, 66) via the bypass lines (64, 72) is controlled by means of valves (74, 78).

10. Method for operating a fuel cell system (10) according to any one of the preceding claims, **characterized in that** all cooling medium circuits (14, 18) are combined into a common manifold (38).

11. Method for operating a fuel cell system (10) according to one of the previous claims, **characterized in that** the cooling medium circuits (14, 18) are operated by cooling medium pumps (30, 34).

12. Method for operating a fuel cell system (10) according to claim 11, **characterized in that** the cooling medium pump (34) of at least one inactive fuel cell stack (26) is operated with a lower drive power.

## Revendications

1. Procédé pour faire fonctionner un système de piles à combustible (10) pour un véhicule automobile, dans lequel le système de piles à combustible (10) comporte au moins deux empilements de piles à combustible (22, 26) et le procédé comprend au moins quatre modes de fonctionnement différents :
- un premier mode de fonctionnement, dans lequel en cas d'inactivité de tous les empilements de piles à combustible (22, 26), au moins un circuit de fluide de refroidissement (14) du système de piles à combustible (10) comprenant au moins un empilement de piles à combustible (22) est préchauffé par l'intermédiaire d'un fluide de refroidissement préchauffé au moyen d'un élément chauffant électrique (42) en contournant tous les circuits de refroidisseur (58) des circuits de fluide de refroidissement (14) actifs par l'intermédiaire de conduites de dérivation (64), et le au moins un empilement de piles à combustible (22) préchauffé est mis en service à une étape suivante pour préchauffer au moins un circuit de fluide de refroidissement (18) supplémentaire du système de piles à combustible (10) comprenant au moins un empilement de piles à combustible (26),
- un deuxième mode de fonctionnement, dans lequel tous les circuits de fluide de refroidissement (14, 18) fonctionnent et au moins un empilement de piles à combustible (26) est inactif, dans lequel les circuits de refroidisseur (58) fonctionnent activement jusqu'à tous les empilements de piles à combustible (22) fonctionnant activement et, de plus, le contournement d'au moins un circuit de refroidisseur (66) est au moins réduit par l'intermédiaire de la conduite de dérivation (72) du au moins un empilement de piles à combustible (26) inactif,
- un troisième mode de fonctionnement, dans lequel lors du fonctionnement de tous les circuits de fluide de refroidissement (14, 18), au moins deux empilements de piles à combustible (22, 26) et les circuits de refroidisseur (58, 66) de tous les empilements de piles à combustible (22, 26) fonctionnent activement, et
- un quatrième mode de fonctionnement, dans lequel en cas d'inactivité d'au moins un empilement de piles à combustible (26), le circuit de refroidisseur (66) associé est contourné par l'intermédiaire de la conduite de dérivation (72), et dans lequel tous les circuits de fluide de refroidissement (14, 18) du système de piles à combustible (10) sont actifs, de sorte que les empilements de piles à combustible (26) inactifs sont maintenus chauds par l'intermédiaire des empilements de piles à combustible (22) actifs.

2. Procédé pour faire fonctionner un système de piles à combustible (10) selon la revendication 1, **caractérisé en ce que** le fluide de refroidissement est en outre utilisé pour chauffer un habitacle du véhicule automobile.

3. Procédé pour faire fonctionner un système de piles à combustible (10) selon la revendication 2, **caractérisé en ce que** le fluide de refroidissement est fourni à un échangeur de chaleur d'habitacle (82) par l'intermédiaire d'une pompe d'échangeur de chaleur d'habitacle (86).

4. Procédé pour faire fonctionner un système de piles à combustible (10) selon la revendication 3, **caractérisé en ce que** le procédé comprend un mode de fonctionnement dans lequel, en cas d'inactivité de tous les circuits de fluide de refroidissement (14, 18), de tous les empilements de piles à combustible (22, 26) et de tous les circuits de refroidisseur (58, 66), le fluide de refroidissement est chauffé au moyen de l'élément chauffant électrique (42) et la chaleur est dissipée par l'intermédiaire de l'échangeur de chaleur d'habitacle (82).

5. Procédé pour faire fonctionner un système de piles à combustible (10) selon l'une des revendications précédentes, **caractérisé en ce que** dans le deuxième mode de fonctionnement, tous les circuits de refroidisseur (66) de l'empilement de piles à combustible (26) inactif sont mis en fonctionnement.

6. Procédé pour faire fonctionner un système de piles à combustible (10) selon l'une des revendications 1 à 4, **caractérisé en ce que** dans le deuxième mode de fonctionnement, au moins un circuit de refroidisseur (66) de l'empilement de piles à combustible (26) inactif est contourné par l'intermédiaire de la conduite de dérivation (72).

7. Procédé pour faire fonctionner un système de piles à combustible (10) selon l'une des revendications précédentes, **caractérisé en ce que** le fluide de refroidissement est préchauffé électriquement au moyen d'un élément chauffant CTP (42).

8. Procédé pour faire fonctionner un système de piles à combustible (10) selon l'une des revendications précédentes, **caractérisé en ce que** dans le premier mode de fonctionnement, un seul circuit de fluide de refroidissement (14) fonctionne activement, de sorte qu'un seul empilement de piles à combustible (22) est préchauffé électriquement.

9. Procédé pour faire fonctionner un système de piles à combustible (10) selon l'une des revendications précédentes, **caractérisé en ce qu'un** contournement ou une réduction du débit des circuits de refroidisseur (58, 66) est régulé via les conduites de dérivation (64, 72) au moyen de vannes (74, 78).

10. Procédé pour faire fonctionner un système de piles à combustible (10) selon l'une des revendications précédentes, **caractérisé en ce que** tous les circuits de fluide de refroidissement (14, 18) sont combinés pour former une conduite de collecte (38) commune.

11. Procédé pour faire fonctionner un système de piles à combustible (10) selon l'une des revendications précédentes, **caractérisé en ce que** les circuits de fluide de refroidissement (14, 18) fonctionnent par l'intermédiaire de pompes à fluide de refroidissement (30, 34).

12. Procédé pour faire fonctionner un système de piles à combustible (10) selon la revendication 11, **caractérisé en ce que** la pompe à fluide de refroidissement (34) d'au moins un empilement de piles à combustible (26) inactif fonctionne avec une puissance d'entraînement plus faible.
